# EUROPEAN PATENT APPLICATION

(11) **EP 3 273 709 A1**
(43) Date of publication of application: **24.01.2018**
(21) Application number: 16764433.5
(22) Date of filing: 08.03.2016
(51) Int. Cl.: H04W 4/06, H04M 11/04, H04W 4/00, H04W 4/22, H04W 84/12

(54) **COMMUNICATION DEVICE, COMMUNICATION TERMINAL, INFORMATION DELIVERY METHOD, INFORMATION RECEPTION METHOD, AND NON-TRANSITORY COMPUTER READABLE MEDIUM**

(30) Priority: 17.03.2015 JP 2015053051
(71) Applicant: NEC Corporation, Tokyo 108-8001 (JP)
(72) Inventor: TAMURA, Toshiyuki, Tokyo 108-8001 (JP)
(74) Representative: MacDougall, Alan John Shaw
(86) International application number: PCT/JP2016/001237
(87) International publication number: WO 2016/147600

(57) **Abstract**

An exemplary object is to provide a communication device that can deliver emergency information to a communication terminal located in a non-3GPP communication area through the non-3GPP communication area. A communication device (10) according to an exemplary embodiment of the present invention is the communication device (10) located in a non-3GPP network (40). The communication device (10) includes an emergency information receiving unit (11) for receiving emergency information delivered from a broadcast server (20) located in a 3GPP network (50), and an emergency information delivery unit (12) for delivering the emergency information to a multicast address as a destination and thereby delivering the emergency information to a communication terminal (30) located in the non-3GPP network (40) and registered to a multicast group associated with the multicast address.

## Description

### Technical Field

The present invention relates to a communication device, a communication terminal, an information delivery method, an information receiving method and a program and, particularly, relates to a communication device, a communication terminal, an information delivery method, an information receiving method and a program regarding the delivery of emergency information.

### Background Art

In order to deliver emergency information to a communication terminal such as a cellular phone in the event of an earthquake, the specifications for the delivery of emergency information are defined in the 3GPP (3rd Generation Partnership Project). In the 3GPP, the specifications for the delivery of emergency information are defined as a PWS (Public Warning System). Further, in Japan, an ETWS (Earthquake and Tsunami Warning System) is specified for an emergency information delivery system using the PWS.

Non Patent Literature 1 defines the specifications of the ETWS and the PWS used in each country. For example, Non Patent Literature 1 specifies the configuration in which a communication terminal that satisfies the specifications of the 3GPP receives emergency information through an eNB (evolved NodeB).

### Citation List

### Non Patent Literature

NPL1: 3GPP TS22.268 V12.2.0 (2013-06)

### Summary of Invention

### Technical Problem

However, the communication system disclosed in Non Patent Literature 1 discloses nothing about the delivery of emergency information to a communication terminal that does not satisfy the specifications of the 3GPP. Accordingly, there is a problem that, in the PWS or the ETWS, it is not possible to carry out the delivery of emergency information using wireless LAN (Local Area Network) communications to a communication terminal or the like that is located in a wireless LAN communication area.

An exemplary object of the present invention is to provide a communication device, a communication terminal, an information delivery method, an information receiving method and a program that can deliver emergency information to a communication terminal located in a non-3GPP communication area through the non-3GPP communication area.

### Solution to Problem

A communication device according to a first exemplary aspect of the present invention includes an emergency information receiving means for receiving emergency information delivered from a broadcast server located in a 3GPP network, and an emergency information delivery means for delivering the emergency information to a multicast address as a destination and thereby delivering the emergency information to a communication terminal located in a non-3GPP network, the communication terminal having been registered to a multicast group associated with the multicast address.

A communication terminal according to a second exemplary aspect of the present invention includes a registration means for making registration to a multicast group managed by a communication device located in the non-3GPP network, and a broadcast communication means for receiving emergency information sent to a multicast address associated with the multicast group from the communication device located in the non-3GPP network and having received the emergency information delivered from a broadcast server located in a 3GPP network.

An information delivery method according to a third exemplary aspect of the present invention is an information delivery method in a communication device located in a non-3GPP network, the method including receiving emergency information delivered from a broadcast server located in a 3GPP network, and delivering the emergency information to a multicast address as a destination and thereby delivering the emergency information to a communication terminal located in a non-3GPP network, the communication terminal having been registered to a multicast group associated with the multicast address.

An information receiving method according to a fourth exemplary aspect of the present invention is an information receiving method in a communication terminal that performs communications through a non-3GPP network, the method including making registration to a multicast group managed by a communication device located in the non-3GPP network, and receiving emergency information sent to a multicast address associated with the multicast group from the communication device located in the non-3GPP network and having received the emergency information delivered from a broadcast server located in a 3GPP network.

A program according to a fifth exemplary aspect of the present invention is a program to be executed by a computer being a communication device located in a non-3GPP network, the program causing the computer to perform receiving emergency information delivered from a broadcast server located in a 3GPP network, and delivering the emergency information to a multicast address as a destination and thereby delivering the emergency information to a communication terminal located in a non-3GPP network, the communication terminal having been registered to a multicast group associated with the multicast address.

### Advantageous Effects of Invention

According to the exemplary aspects of the present invention described above, it is possible to provide a communication device, a communication terminal, an information delivery method, an information receiving method and a program that can deliver emergency information to a communication terminal located in a non-3GPP communication area through the non-3GPP communication area.

### Brief Description of Drawings

Fig. 1 is a block diagram of a communication system according to a first exemplary embodiment.
Fig. 2 is a block diagram of a communication system according to a second exemplary embodiment.
Fig. 3 is a block diagram of a UE according to the second exemplary embodiment.
Fig. 4 is a block diagram of a TWAN device according to the second exemplary embodiment.
Fig. 5 is a view showing the flow of a multicast address notification process according to the second exemplary embodiment.
Fig. 6 is a view showing the flow of a multicast address notification process according to the second exemplary embodiment.
Fig. 7 is a view showing the flow of a registration process to a multicast group by a UE according to the second exemplary embodiment.
Fig. 8 is a view showing the flow of an emergency information delivery process according to the second exemplary embodiment.
Fig. 9 is a block diagram of a communication system according to a third exemplary embodiment.
Fig. 10 is a block diagram of a PGW according to the third exemplary embodiment.
Fig. 11 is a view showing the flow of a registration process to a multicast group by a UE according to the third exemplary embodiment.
Fig. 12 is a view showing the flow of an emergency information delivery process according to the third exemplary embodiment.
Fig. 13 is a block diagram of a communication system according to a fourth exemplary embodiment.
Fig. 14 is a block diagram of an AAA according to the fourth exemplary embodiment.
Fig. 15 is a view showing the flow of a registration process to a multicast group by a UE according to the fourth exemplary embodiment.
Fig. 16 is a view showing the flow of an emergency information delivery process according to the fourth exemplary embodiment.
Fig. 17 is a block diagram of a communication system according to a fifth exemplary embodiment.
Fig. 18 is a view showing the flow of a registration process to a multicast group by a UE according to the fifth exemplary embodiment.
Fig. 19 is a view showing the flow of an emergency information delivery process according to the fifth exemplary embodiment.

### Description of Embodiments

### (First Exemplary Embodiment)

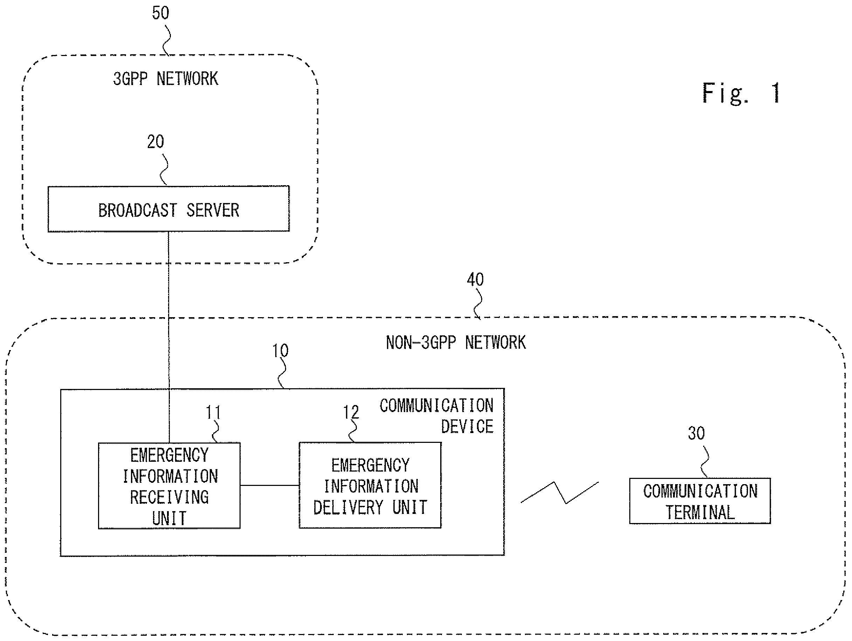

Exemplary embodiments of the present invention are described hereinafter with reference to the drawings. First, a configuration example of a communication system according to a first exemplary embodiment of the present invention is described hereinafter with reference to Fig. 1. The communication system in Fig. 1 includes a communication device 10, a broadcast server 20 and a communication terminal 30. The communication device 10 and the communication terminal 30 are located in a non-3GPP network 40. The broadcast server 20 is located in a 3GPP network 50.

The 3GPP network 50 is a network that is formed by a device which operates in a communication scheme defined in the 3GPP. The non-3GPP network 40 is a network that is formed by a device which operates in a communication scheme not defined in the 3GPP, such as a wireless LAN communication scheme, for example.

A configuration example of the communication device 10 is described hereinafter. The communication device 10 may be a computer device that operates by running a program stored in a memory on a processor such as a CPU (Central Processing Unit). The communication device 10 includes an emergency information receiving unit 11 and an emergency information delivery unit 12. The emergency information receiving unit 11 and the emergency information delivery unit 12 may be software, modules or the like executed by running, on a processor, a program stored in a memory. Alternatively, the emergency information receiving unit 11 and the emergency information delivery unit 12 may be configured using a circuit or the like.

The emergency information receiving unit 11 receives emergency information that is delivered from the broadcast server 20 located in the 3GPP network 50. An interface using a predetermined protocol may be set between the emergency information receiving unit 11 and the broadcast server 20. The emergency information may be information that notifies about the occurrence of a natural disaster such as an earthquake or a tsunami or information that notifies about the occurrence of a crime or the like, for example.

The emergency information delivery unit 12 delivers emergency information to the communication terminal 30 located in the non-3GPP network 40. To be specific, the emergency information delivery unit 12 delivers emergency information to the communication terminal 30 by setting, as a destination, a multicast address associated with a multicast group to which the communication terminal 30 belongs.

The communication terminal 30 is a computer device that operates by running, on a processor, a program stored in a memory, and it may be a cellular phone, a smartphone or the like.

As described above, by using the communication system of Fig. 1, the communication device 10 located in the non-3GPP network 40 can receive emergency information that is delivered from the broadcast server 20 located in the 3GPP network 50. Further, the communication terminal 30 previously belongs to a multicast address group that is used for receiving emergency information. Therefore, the communication device 10 can deliver emergency information to the communication terminal 30 by distributing the emergency information to a multicast address to be used for distributing emergency information. As a result, the communication terminal 30 can receive emergency information through the communication device 10 even when it does not belong to the 3GPP network 50.

### (Second Exemplary Embodiment)

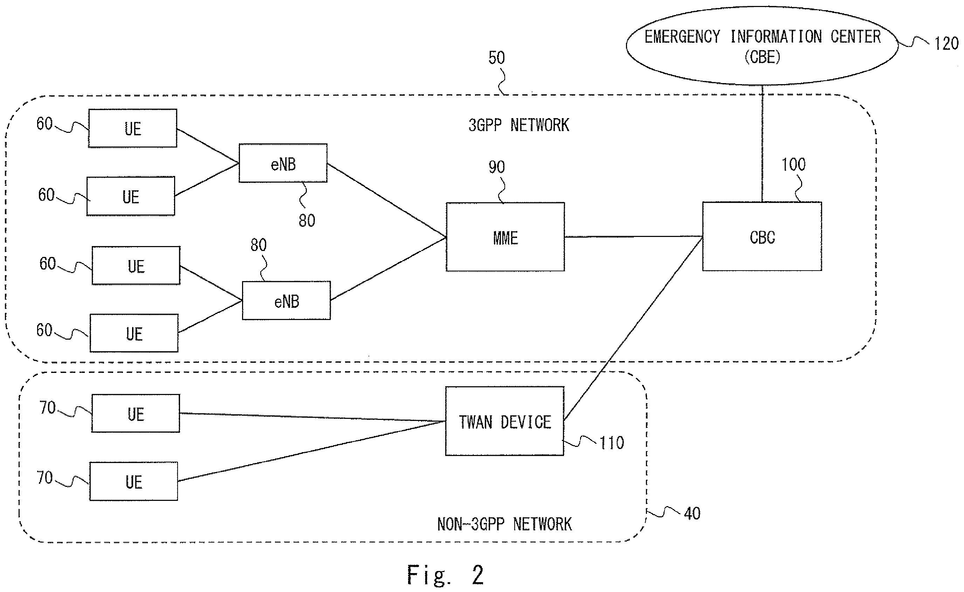

A configuration example of a communication system according to a second exemplary embodiment of the present invention is described hereinafter with reference to Fig. 2. The communication system in Fig. 2 includes a non-3GPP network 40 and a 3GPP network 50, just like the communication system in Fig. 1. The 3GPP network 50 includes a plurality of UEs (User Equipments) 60, eNBs (evolved NodeBs) 80, an MME (Mobility Management Entity) 90, and a CBC (Cell Broadcast Centre) 100. Further, the CBC 100 connects to a CBE (Cell Broadcast Entity) 120.

The UE 60 is a general term for communication terminals to be used by users in the 3GPP. The eNB 80 is a base station that performs wireless communications using LTE (Long Term Evolution) specified in the 3GPP. The MME 90 is a device that performs call control for the UE 60. For example, the MME 90 performs the setting of a communication channel of data between the UE 60 and another UE, the mobility management and control of the UE 60 and the like.

The CBC 100 performs the delivery of emergency information generated in the CBE 120 to a delivery area designated by the CBE 120. For example, when a specific area is designated as a delivery area in the CBE 120, the CBC 100 identifies the eNB 80 that can deliver emergency information to the area designated by the CBE 120. Further, the CBC 100 delivers the emergency information to the UE 60 that belongs to the communication area formed by the identified eNB 80. The CBE 120 may be a server device or the like that is managed by an administrative body which monitors an earthquake, a tsunami or the like, for example.

Further, the CBC 100 identifies a TWAN (Trusted Wireless LAN Access Network) device 110 that can deliver emergency information to a designated area, and delivers the emergency information to the UE 70 that belongs to the communication area formed by the identified TWAN device 110.

The non-3GPP network 40 includes UEs 70 and a TWAN (Trusted Wireless LAN Access Network) device 110. The UE 70 is a UE that has the capability of performing communications through the 3GPP network 50 and performing communications through the TWAN device 110. In this figure, the case where the UE 70 can perform communications through the non-3GPP network 40 while it cannot perform communications through the 3GPP network 50 due to a reason that it is located outside a 3GPP wireless communication area or the like is described as an example.

The TWAN device 110 may be an access point that forms a wireless LAN communication area. The UE 70 that is located in the wireless LAN communication area formed by the TWAN device 110 can receive emergency information delivered from the CBC 100 through the TWAN device 110. Further, the TWAN device 110 delivers emergency information to the UE 70 by multicast communications. The TWAN device 110 may be a device that is trusted by a telecommunications carrier which manages the 3GPP network 50; in other words, a device that is managed by a telecommunications carrier.

Further, when the UE 70 is located in a wireless LAN communication area formed in a 3GPP wireless communication area, it may receive emergency information from an access point or the like that forms the wireless LAN communication area. There is a case where UE 70 receives emergency information in both a 3GPP wireless communication area and a wireless LAN communication area, and it may discard either the emergency information received in the former area or that received in the latter area in this case.

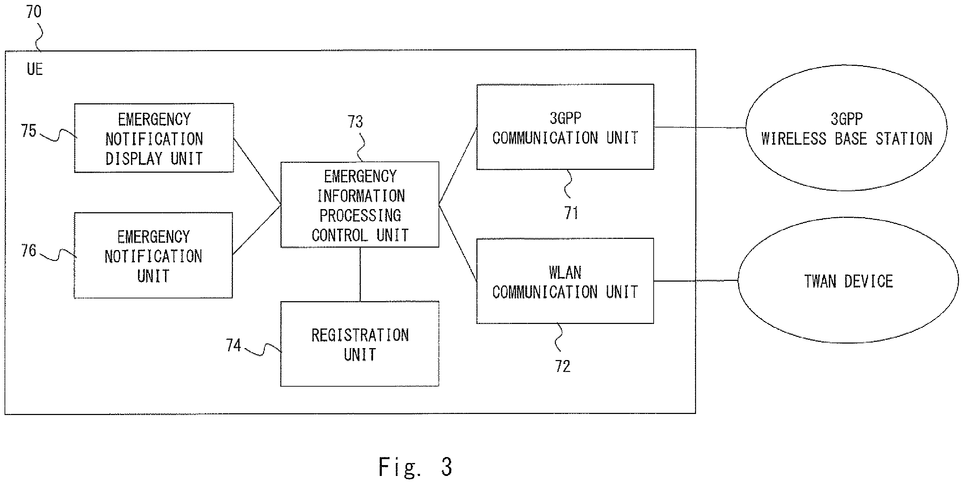

A configuration example of the UE 70 according to the second exemplary embodiment of the present invention is described hereinafter with reference to Fig. 3. The UE 70 includes a 3GPP communication unit 71, a WLAN (Wireless LAN) communication unit 72, an emergency information processing control unit 73, a registration unit 74, an emergency notification display unit 75 and an emergency notification unit 76. The 3GPP communication unit 71, the WLAN communication unit 72, the emergency information processing control unit 73, the registration unit 74, the emergency notification display unit 75 and the emergency notification unit 76 may be software, modules or the like that operate by running a program stored in a memory on a processor of the UE 70. Alternatively, the 3GPP communication unit 71, the WLAN communication unit 72, the emergency information processing control unit 73, the registration unit 74, the emergency notification display unit 75 and the emergency notification unit 76 may be configured using a circuit or the like.

The 3GPP communication unit 71 communicates with a wireless base station specified in the 3GPP. The wireless base station specified in the 3GPP may be the eNB 80, for example. The WLAN communication unit 72 communicates with the TWAN device 110 by using wireless LAN communications. The wireless LAN communications may be performed using a communication scheme specified in an IEEE (The Institute of Electrical and Electronics Engineers) 802, for example.

The emergency information processing control unit 73 receives emergency information that is delivered from the CBC 100 through the 3GPP communication unit 71 or the WLAN communication unit 72. For example, when the UE 70 is located in a communication area that is formed by the eNB 80, it may receive emergency information through the 3GPP communication unit 71. On the other hand, when the UE 70 is located in a wireless LAN communication area that is formed by the TWAN device 110, it may receive emergency information through the WLAN communication unit 72. Further, when the UE 70 is located in an area where a communication area formed by the eNB 80 and a wireless LAN communication area formed by the TWAN device 110 overlap, there is a case where the UE 70 receives the same emergency information from the two wireless systems. In such a case, the emergency information processing control unit 73 may recognize the overlapping reception of emergency information by referring to a message identifier of the delivered emergency information or the like, and discard the emergency information received from either one of the 3GPP communication unit 71 and the WLAN communication unit 72.

The emergency information processing control unit 73 outputs the emergency information received from the 3GPP communication unit 71 or the WLAN communication unit 72 to the emergency notification display unit 75 or the emergency notification unit 76.

The emergency notification display unit 75 displays the emergency information received from the emergency information processing control unit 73 on a display and thereby causes a user of the UE 70 to recognize the emergency information. The emergency notification display unit 75 may make a display format for displaying the emergency information received from the 3GPP communication unit 71 and a display format for displaying the emergency information received from the WLAN communication unit 72 different from or the same as each other.

When the emergency notification unit 76 receives the emergency information from the emergency information processing control unit 73, it outputs a predetermined sound or vibration and thereby causes a user of the UE 70 to recognize the emergency information. The emergency notification unit 76 may make a sound or a vibration to be output when the emergency information is received from the 3GPP communication unit 71 and a sound or a vibration to be output when the emergency information is received from the WLAN communication unit 72 different from or the same as each other.

The registration unit 74 performs a registration process to a multicast group that is required when receiving emergency information through the WLAN communication unit 72. When connecting to the 3GPP network 50 through the 3GPP communication unit 71, which is, when making Attach to the 3GPP network 50, the registration unit 74 receives, from the eNB 80, information about a multicast address that is set as a destination of emergency information. Alternatively, information about a multicast address may be notified to the UE 70 from an AAA (Authentication Authorization Accounting) server located in the 3GPP network 50 by using an EAP (Extensible Authentication Protocol) message at the time of subscriber authentication that is performed when the UE 70 accesses the non-3GPP network 40. Alternatively, information about a multicast address may be notified to the UE 70 from an ANDSF (Access Network Discovery and Selection Function) server located in an external network of the 3GPP network 50 by using the user plane. Further, the registration unit 74 makes registration to a multicast group associated with the received multicast address in the TWAN device 110 through the WLAN communication unit 72. For example, the registration unit 74 makes registration to a multicast group that is managed by the TWAN device 110 by executing processing such as IGMP (Internet Group Management Protocol) or MLD (emergency information Multicast Listener Discovery).

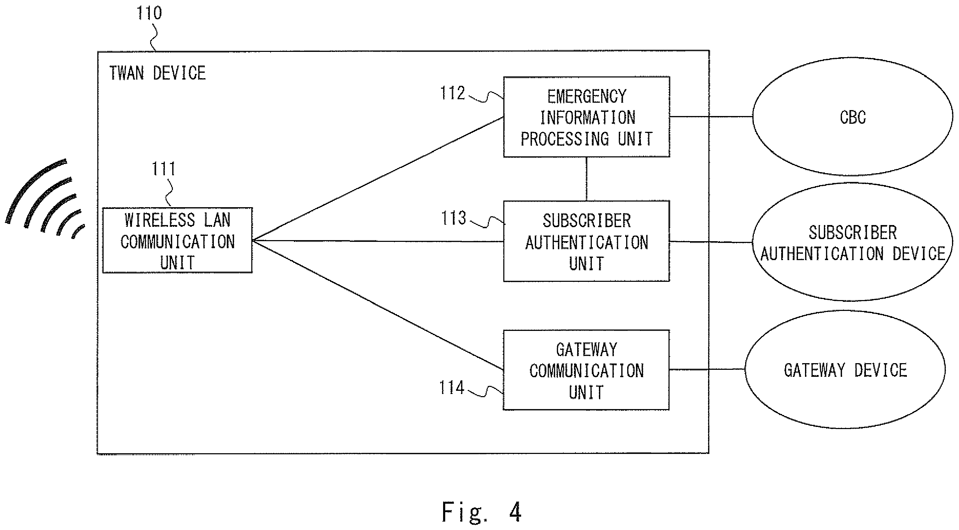

A configuration example of the TWAN device 110 according to the second exemplary embodiment of the present invention is described hereinafter with reference to Fig. 4. The TWAN device 110 includes a wireless LAN communication unit 111, an emergency information processing unit 112, a subscriber authentication unit 113 and a gateway communication unit 114. The wireless LAN communication unit 111, the emergency information processing unit 112, the subscriber authentication unit 113 and the gateway communication unit 114 in the TWAN device 110 may be software, modules or the like that operate by running a program stored in a memory on a processor of the TWAN device 110. Alternatively, the wireless LAN communication unit 111, the emergency information processing unit 112, the subscriber authentication unit 113 and the gateway communication unit 114 may be configured using a circuit or the like.

The emergency information processing unit 112 receives emergency information that is delivered from the CBC 100. The emergency information processing unit 112 outputs the received emergency information to the wireless LAN communication unit 111. The subscriber authentication unit 113 performs an authentication process for the UE 70 that is located in the wireless LAN communication area formed by the TWAN device 110. For example, the subscriber authentication unit 113 performs an authentication process for the UE 70 with an AAA server, an HSS (Home Subscriber Server) or the like located in the 3GPP network 50. Further, the subscriber authentication unit 113 manages a multicast group. For example, when a request for registration to a multicast group is notified from the UE 70 that is located in the communication area formed by the TWAN device 110, the subscriber authentication unit 113 manages the multicast group and the UE 70 in association with each other.

The gateway communication unit 114 sends and receives user data, for example, with a gateway device that is located in the 3GPP network 50. The gateway device that is located in the 3GPP network 50 may be a PGW (Packet data network Gateway), for example.

The wireless LAN communication unit 111 performs wireless LAN communications with the UE 70. Further, when emergency information is output from the emergency information processing unit 112, the wireless LAN communication unit 111 sends the emergency information to a multicast address as a destination. The emergency information that is sent to a multicast address as a destination is delivered to the UE 70 that is managed in association with the multicast group in the subscriber authentication unit 113.

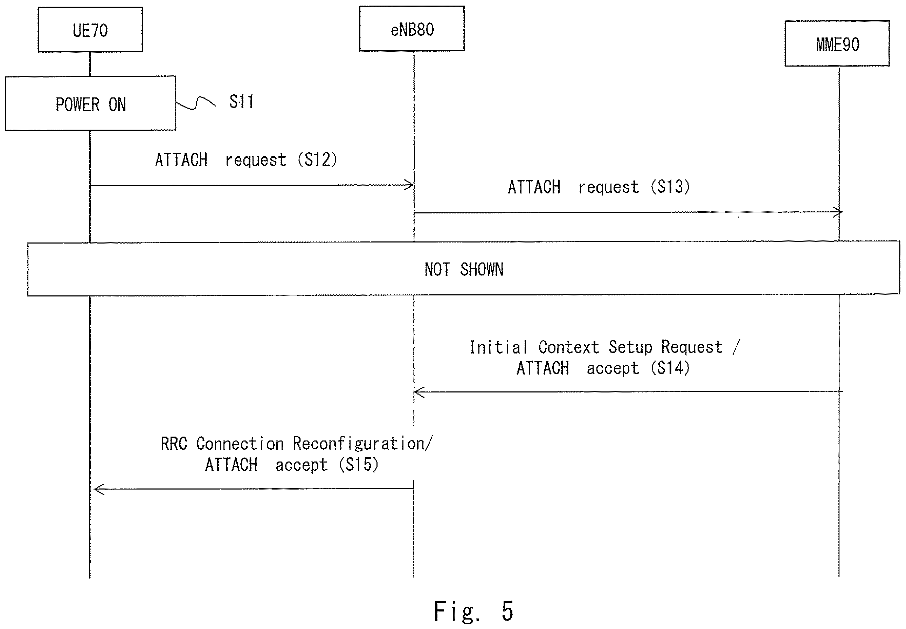

The flow of a multicast address notification process is described hereinafter with reference to Fig. 5. First, the UE 70 turns power to ON in the 3GPP network 50 (S11). Next, the UE 70 sends an Attach request message to the eNB 80 (S12). Then, the eNB 80 sends the Attach request message sent from the UE 70 to the MME 90 (S13). After that, an Attach process for the UE 70 is performed between the UE 70 and the MME 90. The detailed description of the Attach process is omitted.

When an authentication process performed during the Attach process is completed, the MME 90 sends, to the eNB 80, an Initial Context Setup Request/ ATTACH accept message to which a multicast address is set (S14). The multicast address that is set to the Initial Context Setup Request/ ATTACH accept message is an address that is required when the UE 70 receives emergency information in the case where it is located in the wireless LAN communication area formed by the TWAN device 110.

When the eNB 80 receives the Initial Context Setup Request/ ATTACH accept message, it sends an RRC Connection Reconfiguration/ ATTACH accept message to the UE 70 (S15). The eNB 80 sets the multicast address that is set to the Initial Context Setup Request/ ATTACH accept message to the RRC Connection Reconfiguration/ ATTACH accept message. Information about the multicast address may be notified from the MME 90 to the UE 70 by using a PCO (Protocol Configuration Option) parameter that is set to the ATTACH accept message.

As described above, in the Attach process to the 3GPP network 50, the UE 70 can receive a multicast address required for receiving emergency information in the wireless LAN communication area formed by the TWAN device 110.

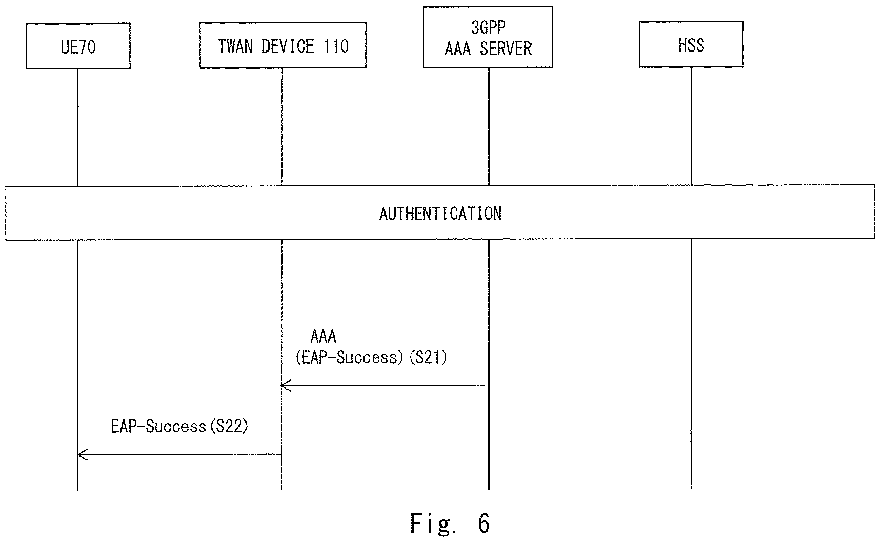

The flow of a multicast address notification process which is different from that in Fig. 5 is described hereinafter with reference to Fig. 6. While the flow of the process when the UE 70 receives a multicast address through the eNB 80 located in the 3GPP network 50 is described in Fig. 5, the flow of the process when the UE 70 receives a multicast address through the TWAN device 110 is described in Fig. 6.

Fig. 6 is based on the premise that an authentication process for the UE 70 that is located in the communication area formed by the TWAN device 110 has been performed in the AAA server and the HSS located in the 3GPP network 50. Specifically, the AAA server and the HSS perform authentication as to whether the UE 70 can use the 3GPP network 50 through the TWAN device 110 or not. It is assumed in this example that the AAA server and the HSS have determined to authorize the UE 70 to use the 3GPP network 50 through the TWAN device 110.

In this case, the AAA server sends an AAA(EAP(PPP Extensible Authentication Protocol)-Success) message to the TWAN device 110 (S21). Further, the AAA server sets a multicast address to the AAA(EAP-Success) message.

Then, the TWAN device 110 sends an EAP-Success message to the UE 70 (S22). The TWAN device 110 sets the multicast address that is set to the AAA(EAP-Success) message to the EAP-Success message. The UE 70 receives the EAP-Success message and can thereby receive the multicast address that is required for receiving emergency information in the wireless LAN communication area formed by the TWAN device 110. Information about the multicast address may be notified from the TWAN device 110 to the UE 70 by using a PCO parameter that is set to the EAP-Success message.

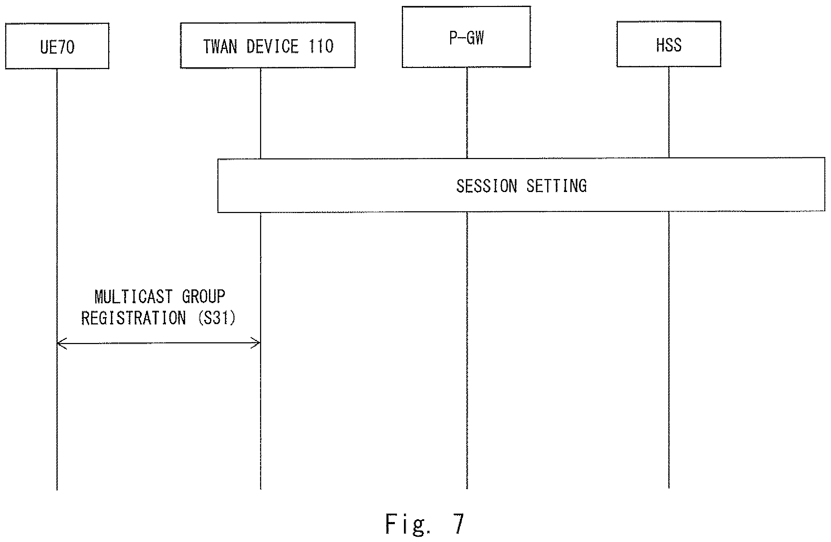

The flow of a registration process to a multicast group by the UE 70 according to the second exemplary embodiment of the present invention is described hereinafter with reference to Fig. 7. Fig. 7 is based on the premise that the setting of a session between the TWAN device 110 and the PGW located in the 3GPP network 50 has been completed, and further the UE 70 has acquired a multicast address. For example, the setting of a session between the TWAN device 110 and the PGW may be the setting of a GTP (General Packet Radio Service Tunneling Protocol) Tunnel to be used when transmitting and receiving data between the TWAN device 110 and the PGW.

When the setting of a session between the TWAN device 110 and the PGW is completed, the UE 70 makes registration to a multicast group associated with a multicast address held by itself in the TWAN device 110 (S31). For example, the UE 70 makes registration to a multicast group that is managed by the TWAN device 110 by an IGMP or MLD procedure.

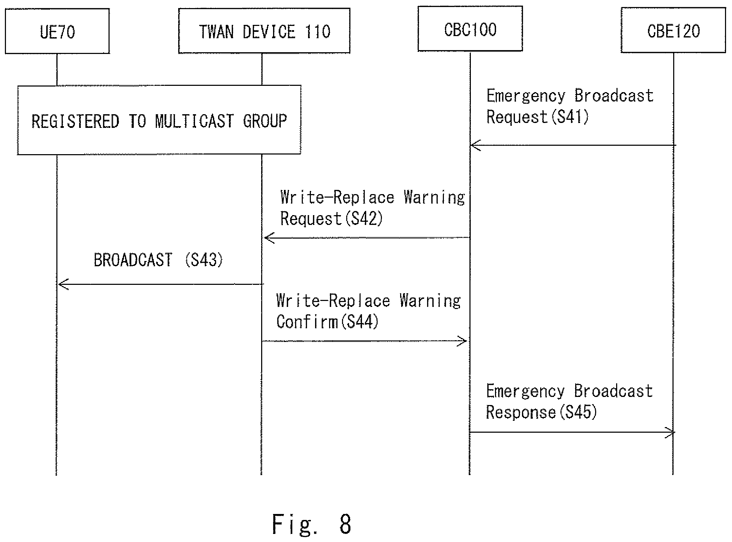

The flow of an emergency information delivery process according to the second exemplary embodiment of the present invention is described hereinafter with reference to Fig. 8. In Fig. 8, it is assumed that the UE 70 has completed the registration to a multicast group that is managed by the TWAN device 110.

First, the CBE 120 sends, to the CBC 100, an Emergency Broadcast Request message that instructs the delivery of emergency information (S41). Next, the CBC 100 sends, to the TWAN device 110, a Write-Replace Warning Request message that instructs the delivery of emergency information (S42). The CBC 100 sends the Write-Replace Warning Request message to the TWAN device 110 by using a predetermined protocol with the TWAN device 110. In other words, the CBC 100 sends the Write-Replace Warning Request message to the TWAN device 110 by using a predetermined interface with the TWAN device 110. The interface between the CBC 100 and the TWAN device 110 may be the interface specified in the 3GPP, for example.

The TWAN device 110 compares area information (Warning Area Information) for broadcasting the emergency information contained in the Write-Replace Warning Request message with the geographical location of the communication area formed by itself. When the communication area formed by the TWAN device 110 itself is included in the area indicated by the Warning Area Information, the TWAN device 110 broadcasts the emergency information to the multicast address as a destination (S43). The communication area formed by itself may be determined for each wireless LAN communication unit 111.

As a result that the TWAN device 110 broadcasts emergency information to the multicast address as a destination, the emergency information is delivered to the UE 70 that belongs to the multicast group associated with the multicast address

Next, the TWAN device 110 sends a Write-Replace Warning Confirm message to the CBC 100 as a response message to the Write-Replace Warning Request message (S44). The CBC 100 then sends an Emergency Broadcast Response message to the CBE 120 as a response message to the Emergency Broadcast Request message (S45).

As described above, by using the communication system according to the second exemplary embodiment of the present invention, the CBC 100 can send emergency information to the TWAN device 110 through a predetermined interface. Further, the UE 70 can acquire a multicast address for the delivery of emergency information in advance, and make registration to a multicast group associated with the multicast address for the delivery of emergency information. Therefore, the TWAN device 110 sends the emergency information sent from the CBC 100 to the multicast address as a destination and can thereby deliver the emergency information to the UE 70.

The UE 70 can thereby receive the emergency information delivered from the CBC 100 through the TWAN device 110, in addition to receiving the emergency information through the 3GPP network 50.

### (Third Exemplary Embodiment)

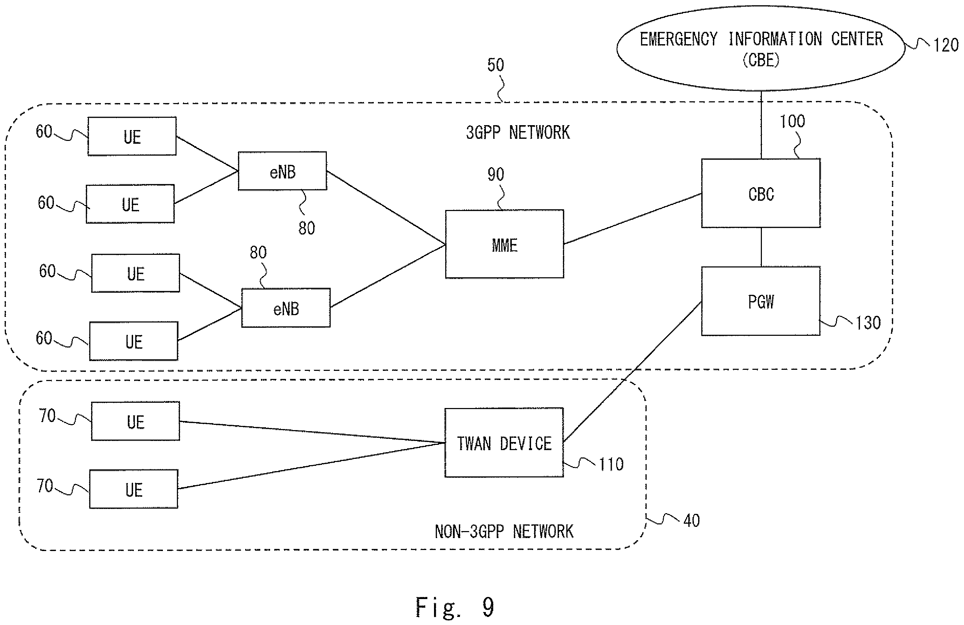

A configuration example of a communication system according to a third exemplary embodiment of the present invention is described hereinafter with reference to Fig. 9. The communication system in Fig. 9 has the configuration where a PGW (Packet Data Network Gateway) is placed between the TWAN device 110 and the CBC 100. The other configuration of the communication system in Fig. 9 is the same as that in Fig. 2, and therefore the detailed description thereof is omitted.

A PGW 130 is located in the 3GPP network 50. The CBC 100 sends emergency information to the PGW 130 by using a predetermined protocol with the PGW 130. Further, the PGW 130 sends the emergency information sent from the CBC 100 to the TWAN device 110 by using a predetermined protocol. The PGW 130 may send the emergency information sent from the CBC 100 to the TWAN device 110 by using a GTP protocol, user plane data using a GTP protocol, or a PMIP (Proxy Mobile IP) protocol.

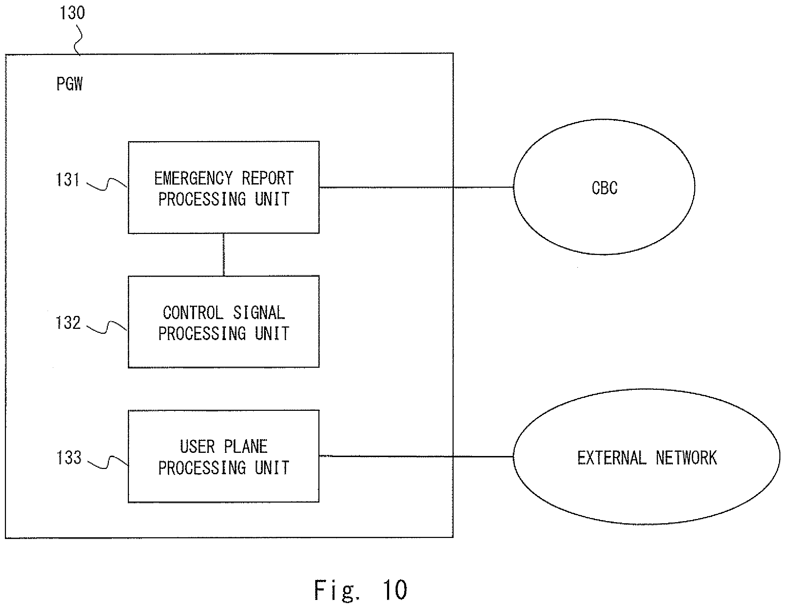

A configuration example of the PGW 130 according to the third exemplary embodiment of the present invention is described hereinafter with reference to Fig. 10. The PGW 130 includes an emergency report processing unit 131, a control signal processing unit 132 and a user plane processing unit 133. The emergency report processing unit 131, the control signal processing unit 132 and the user plane processing unit 133 may be software, modules or the like executed by running a program stored in a memory on a processor of the PGW 130. Alternatively, the emergency report processing unit 131, the control signal processing unit 132 and the user plane processing unit 133 may be configured using a circuit or the like.

The user plane processing unit 133 sends and receives user data to and from an external network such as the Internet. Further, the user plane processing unit 133 sends and receives user data also to and from the TWAN device 110.

The emergency report processing unit 131 receives emergency information sent from the CBC 100. The control signal processing unit 132 sends the emergency information sent from the CBC 100 as control information to the TWAN device 110.

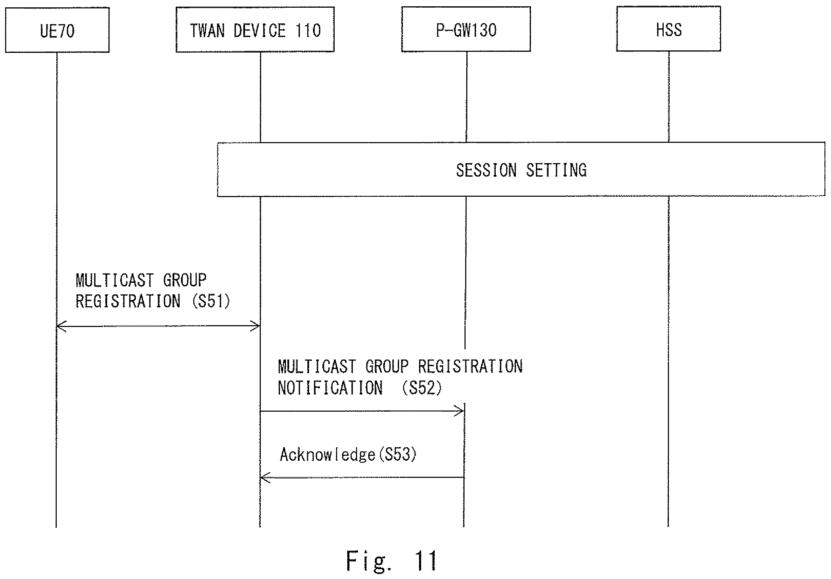

The flow of a registration process to a multicast group by the UE 70 according to the third exemplary embodiment of the present invention is described hereinafter with reference to Fig. 11. Fig. 11 is based on the premise that the setting of a session between the TWAN device 110 and the PGW 130 located in the 3GPP network 50 has been completed, and further the UE 70 has acquired a multicast address. For example, the setting of a session between the TWAN device 110 and the PGW may be the setting of a GTP Tunnel to be used when transmitting and receiving data between the TWAN device 110 and the PGW 130.

Step S51 is the same as Step S31 in Fig. 7 and therefore not redundantly described in detail. When the TWAN device 110 completes the registration of the UE 70 to a multicast group, it sends, to the PGW 130, a multicast group registration notification message which notifies that the UE 70 is registered to a multicast group for delivering emergency information (S52). The multicast group registration notification message may be a GTP message, a PMIP message or the like, for example.

Then, the PGW 130 sends an Acknowledge message to the TWAN device 110 as a response to the multicast group registration notification message (S53).

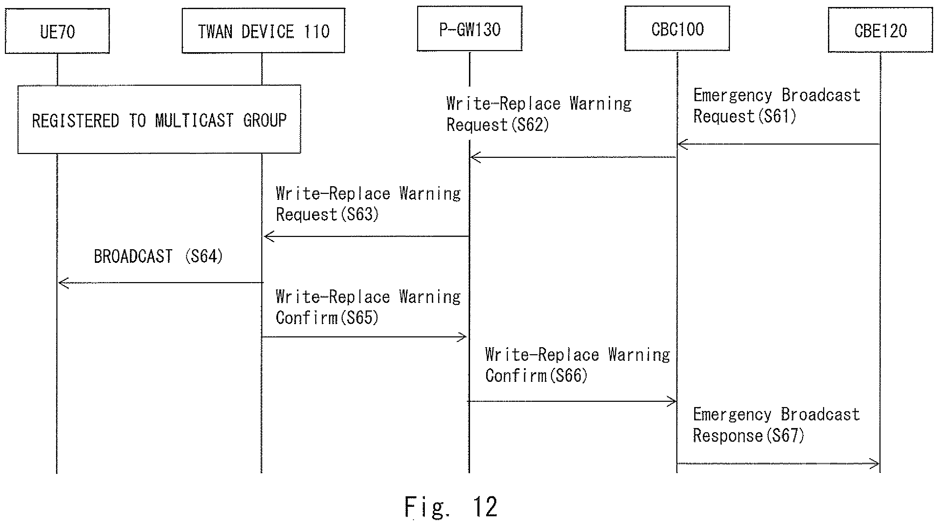

The flow of an emergency information delivery process according to the third exemplary embodiment of the present invention is described hereinafter with reference to Fig. 12. In Fig. 12, it is assumed that the UE 70 has completed the registration to a multicast group that is managed by the TWAN device 110.

First, the CBE 120 sends, to the CBC 100, an Emergency Broadcast Request message that instructs the delivery of emergency information (S61). Next, the CBC 100 sends, to the PGW 130, a Write-Replace Warning Request message that instructs the delivery of emergency information (S62). The CBC 100 sends the Write-Replace Warning Request message to the PGW 130 by using a predetermined protocol with the PGW 130. In other words, the CBC 100 sends the Write-Replace Warning Request message to the PGW 130 by using a predetermined interface with the PGW 130. The interface between the CBC 100 and the PGW 130 may be the interface specified in the 3GPP, for example.

Then, the PGW 130 sends a Write-Replace Warning Request message to the TWAN device 110 by using a predetermined protocol with the TWAN device 110. In other words, the PGW 130 sends the Write-Replace Warning Request to the TWAN device 110 by using a predetermined interface with the TWAN device 110. The interface between the PGW 130 and the TWAN device 110 may be the interface specified in the 3GPP, for example.

The TWAN device 110 compares area information (Warning Area Information) for broadcasting the emergency information contained in the Write-Replace Warning Request message with the geographical location of the communication area formed by itself. When the communication area formed by the TWAN device 110 itself is included in the area indicated by the Warning Area Information, the TWAN device 110 broadcasts the emergency information to the multicast address as a destination (S64)..

As a result that the TWAN device 110 broadcasts the emergency information to the multicast address as a destination, the emergency information is delivered to the UE 70 that belongs to the multicast group associated with the multicast address.

Next, the TWAN device 110 sends a Write-Replace Warning Confirm message to the PGW 130 as a response message to the Write-Replace Warning Request message (S65). The PGW 130 then sends a Write-Replace Warning Confirm message to the CBC 100 as a response message to the Write-Replace Warning Request message (S66).

Then, the CBC 100 sends an Emergency Broadcast Response message to the CBE 120 as a response message to the Emergency Broadcast Request message (S67).

As described above, by using the communication system according to the third exemplary embodiment of the present invention, the CBC 100 can send emergency information to the TWAN device 110 via the PGW 130 through a predetermined interface. Further, the UE 70 can acquire a multicast address for the delivery of emergency information in advance, and make registration to a multicast group associated with the multicast address for the delivery of emergency information. Therefore, the TWAN device 110 sends emergency information sent from the CBC 100 to the multicast address as a destination and can thereby deliver the emergency information to the UE 70.

The UE 70 can thereby receive the emergency information delivered from the CBC 100 through the TWAN device 110, in addition to receiving the emergency information through the 3GPP network 50.

### (Fourth Exemplary Embodiment)

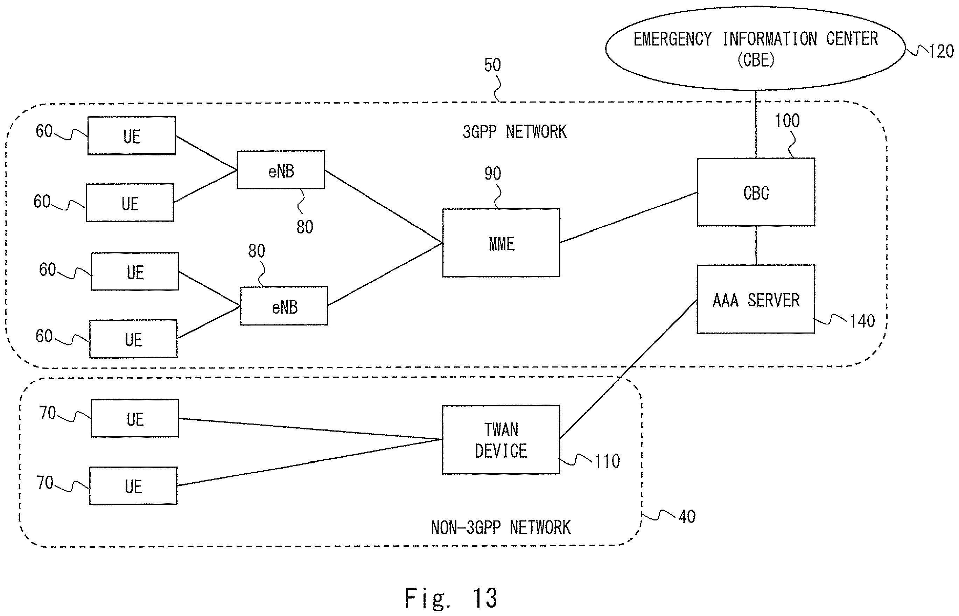

A configuration example of a communication system according to a fourth exemplary embodiment of the present invention is described hereinafter with reference to Fig. 13. The communication system in Fig. 13 has the configuration where an AAA server 140 is placed instead of the PGW 130 in the communication system of Fig. 9. The other configuration of the communication system in Fig. 13 is the same as that in Fig. 9, and therefore the detailed description thereof is omitted.

The AAA server 140 is located in the 3GPP network 50. The CBC 100 sends emergency information to the AAA server 140 by using a predetermined protocol with the AAA server 140. Further, the AAA server 140 sends the emergency information sent from the CBC 100 to the TWAN device 110 by using a predetermined protocol.

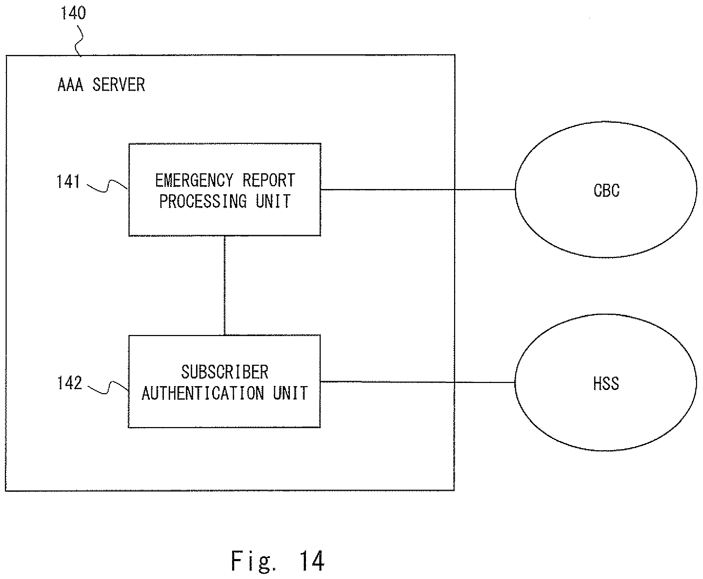

A configuration example of the AAA server 140 according to the third exemplary embodiment of the present invention is described hereinafter with reference to Fig. 14. The AAA server 140 includes an emergency report processing unit 141 and a subscriber authentication unit 142. The emergency report processing unit 141 and the subscriber authentication unit 142 may be software, modules or the like executed by running a program stored in a memory on a processor of the AAA server 140. Alternatively, the emergency report processing unit 141 and the subscriber authentication unit 142 may be configured using a circuit or the like.

The emergency report processing unit 141 receives emergency information sent from the CBC 100. The emergency report processing unit 141 sends the emergency information sent from the CBC 100 as control information to the TWAN device 110. The subscriber authentication unit 142 performs an authentication process for the UE 60, the UE 70 and the like in corporation with the HSS.

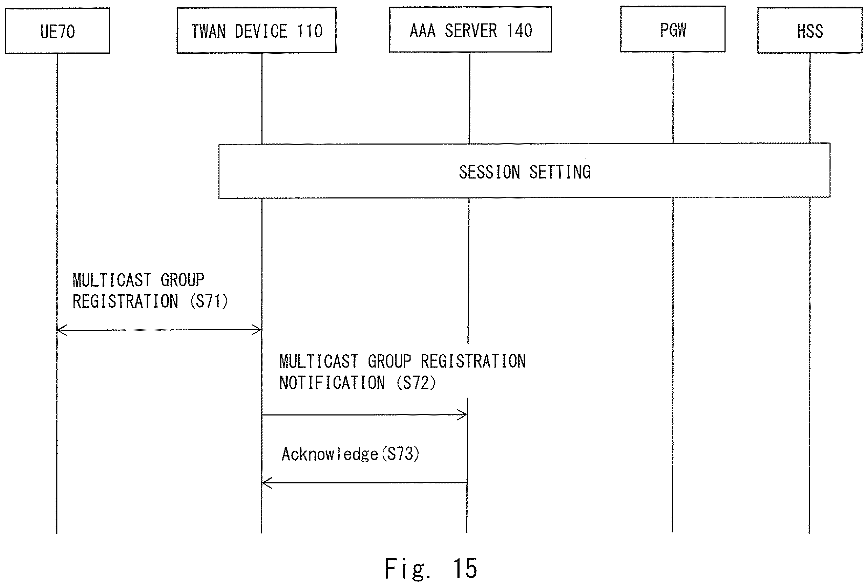

The flow of a registration process to a multicast group by the UE 70 according to the fourth exemplary embodiment of the present invention is described hereinafter with reference to Fig. 15. Fig. 15 is based on the premise that the setting of a session between the TWAN device 110 and the PGW located in the 3GPP network 50 has been completed, and further the UE 70 has acquired a multicast address. For example, the setting of a session between the TWAN device 110 and the PGW may be the setting of a GTP Tunnel to be used when transmitting and receiving data between the TWAN device 110 and the PGW.

Step S71 is the same as Step S31 in Fig. 7 and therefore not redundantly described in detail. When the TWAN device 110 completes the registration of the UE 70 to a multicast group, it sends, to the AAA server 140, a multicast group registration notification message which notifies that the UE 70 is registered to a multicast group for delivering emergency information (S72). The multicast group registration notification message may be a DIAMETER message, a Radius message or the like, for example.

Then, the AAA server 140 sends an Acknowledge message to the TWAN device 110 as a response to the multicast group registration notification message (S73).

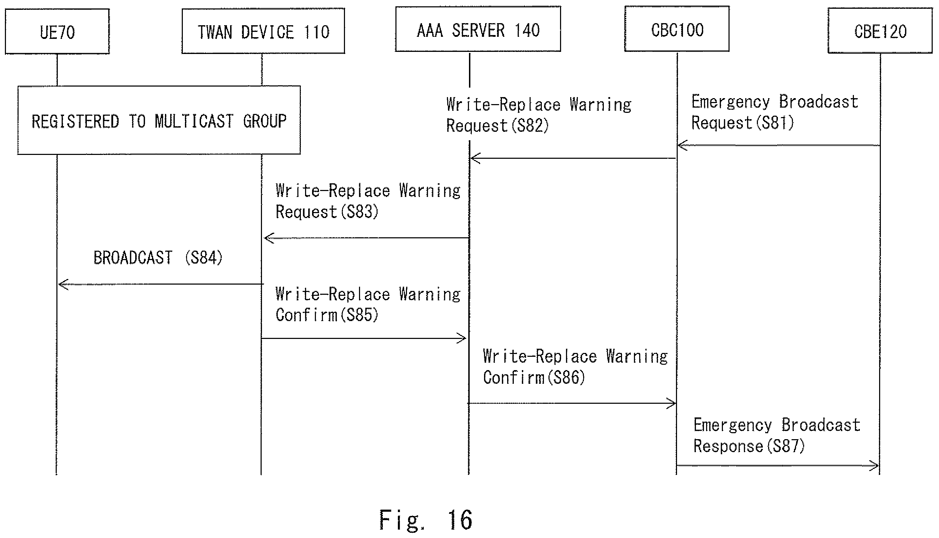

The flow of an emergency information delivery process according to the fourth exemplary embodiment of the present invention is described hereinafter with reference to Fig. 16. The process in Fig. 16 is the same as the process in Fig. 12 except that the PGW 130 in Fig. 12 is replaced with the AAA server 140. Therefore, the detailed description of Fig. 16 is omitted.

As described above, by using the communication system according to the third exemplary embodiment of the present invention, the CBC 100 can send emergency information to the TWAN device 110 via the AAA server 140 through a predetermined interface. Further, the UE 70 can acquire a multicast address for the delivery of emergency information in advance, and make registration to a multicast group associated with the multicast address for the delivery of emergency information. Therefore, the TWAN device 110 sends emergency information sent from the CBC 100 to the multicast address as a destination and can thereby deliver the emergency information to the UE 70.

The UE 70 can thereby receive the emergency information delivered from the CBC 100 through the TWAN device 110, in addition to receiving the emergency information through the 3GPP network 50.

### (Fifth Exemplary Embodiment)

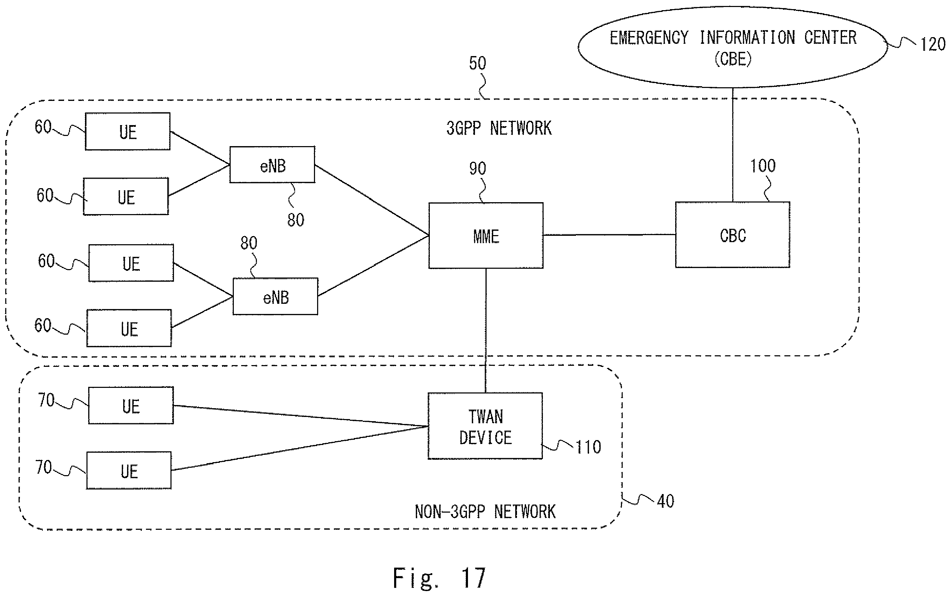

A configuration example of a communication system according to a fifth exemplary embodiment of the present invention is described hereinafter with reference to Fig. 17. In the communication system in Fig. 17, the AAA server 140 is removed from the communication system in Fig. 13, and the MME 90 and the TWAN device 110 are connected.

The MME 90 sends emergency information sent from the CBC 100 to the TWAN device 110 by using a predetermined protocol.

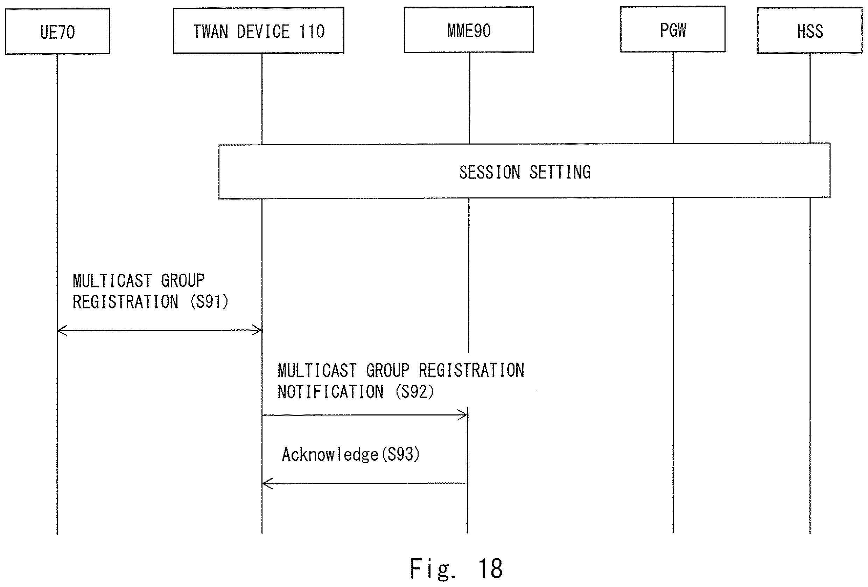

The flow of a registration process to a multicast group by the UE 70 according to the fifth exemplary embodiment of the present invention is described hereinafter with reference to Fig. 18. Fig. 18 is based on the premise that the setting of a session between the TWAN device 110 and the PGW located in the 3GPP network 50 has been completed, and further the UE 70 has acquired a multicast address. For example, the setting of a session between the TWAN device 110 and the PGW may be the setting of a GTP Tunnel to be used when transmitting and receiving data between the TWAN device 110 and the PGW.

Step S91 is the same as Step S31 in Fig. 7 and therefore not redundantly described in detail. When the TWAN device 110 completes the registration of the UE 70 to a multicast group, it sends, to the MME 90, a multicast group registration notification message which notifies that the UE 70 is registered to a multicast group for delivering emergency information (S92). The multicast group registration notification message may be a message using a protocol specified in the 3GPP, for example.

Then, the MME 90 sends an Acknowledge message to the TWAN device 110 as a response to the multicast group registration notification message (S93).

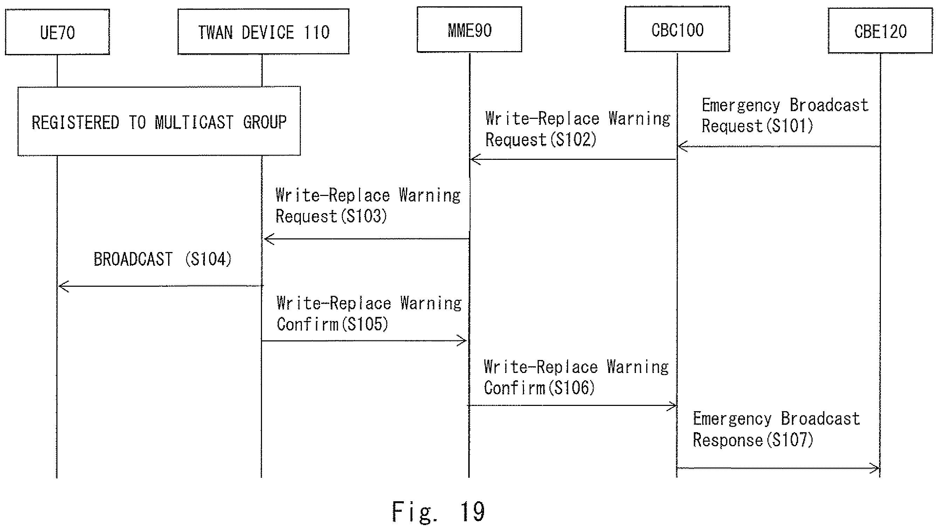

The flow of an emergency information delivery process according to the fifth exemplary embodiment of the present invention is described hereinafter with reference to Fig. 19. The process in Fig. 19 is the same as the process in Fig. 12 except that the PGW 130 in Fig. 12 is replaced with the MME 90. Therefore, the detailed description of Fig. 19 is omitted.

As described above, by using the communication system according to the fifth exemplary embodiment of the present invention, the CBC 100 can send emergency information to the TWAN device 110 via the MME 90 through a predetermined interface. Further, the UE 70 can acquire a multicast address for the delivery of emergency information in advance, and make registration to a multicast group associated with the multicast address for the delivery of emergency information. Therefore, the TWAN device 110 sends emergency information sent from the CBC 100 to the multicast address as a destination and can thereby deliver the emergency information to the UE 70.

The UE 70 can thereby receive the emergency information delivered from the CBC 100 through the TWAN device 110, in addition to the case where it is located in the 3GPP network 50.

Although the present invention is described as a hardware configuration in the above exemplary embodiments, the present invention is not limited thereto. The present invention may be implemented by causing a CPU (Central Processing Unit) to execute a computer program to perform processing in the communication terminal (e.g., UE 70 etc.), the communication device (e.g., TWAN device 110 etc.) and each of the node devices located in the 3GPP network.

In the above example, the program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R , CD-R/W, DVD-ROM (Digital Versatile Disc Read Only Memory), DVD-R (DVD Recordable)), DVD-R DL (DVD-R Dual Layer)), DVD-RW (DVD Rewritable)), DVD-RAM), DVD+R), DVR+R DL), DVD+RW), BD-R (Blu-ray (registered trademark) Disc Recordable)), BD-RE (Blu-ray (registered trademark) Disc Rewritable)), BD-ROM), and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

It should be noted that the present invention is not limited to the above-described exemplary embodiments and may be varied in many ways within the scope of the present invention.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2015-053051 filed on March 17, 2015, the disclosure of which is incorporated herein in its entirety by reference.

### Reference Signs List

- 10: COMMUNICATION DEVICE
- 11: EMERGENCY INFORMATION RECEIVING UNIT
- 12: EMERGENCY INFORMATION DELIVERY UNIT
- 20: BROADCAST SERVER
- 30: COMMUNICATION TERMINAL
- 40: NON-3GPP NETWORK
- 50: 3GPP NETWORK
- 60: UE
- 70: UE
- 71: 3GPP COMMUNICATION UNIT
- 72: WLAN COMMUNICATION UNIT
- 73: EMERGENCY INFORMATION PROCESSING CONTROL UNIT
- 74: REGISTRATION UNIT
- 75: EMERGENCY NOTIFICATION DISPLAY UNIT
- 76: EMERGENCY NOTIFICATION UNIT
- 80: eNB
- 90: MME
- 100: CBC
- 110: TWAN DEVICE
- 111: WIRELESS LAN COMMUNICATION UNIT
- 112: EMERGENCY INFORMATION PROCESSING UNIT
- 113: SUBSCRIBER AUTHENTICATION UNIT
- 114: GATEWAY COMMUNICATION UNIT
- 120: CBE
- 130: PGW
- 131: EMERGENCY REPORT PROCESSING UNIT
- 132: CONTROL SIGNAL PROCESSING UNIT
- 133: USER PLANE PROCESSING UNIT
- 140: AAA SERVER
- 141: EMERGENCY REPORT PROCESSING UNIT
- 142: SUBSCRIBER AUTHENTICATION UNIT

## Claims

1. A communication device located in a non-3GPP network, comprising:
emergency information receiving means for receiving emergency information delivered from a broadcast server located in a 3GPP network; and
emergency information delivery means for delivering the emergency information to a multicast address as a destination and thereby delivering the emergency information to a communication terminal located in a non-3GPP network, the communication terminal having been registered to a multicast group associated with the multicast address.

2. The communication device according to Claim 1, wherein the emergency information receiving means receives emergency information delivered from a CBC located in the 3GPP network.

3. The communication device according to Claim 2, wherein the emergency information receiving means receives emergency information delivered from the CBC through a PGW, an AAA server or an MME.

4. The communication device according to any one of Claims 1 to 3, wherein the emergency information delivery means delivers the emergency information to the communication terminal located in a wireless LAN communication area formed by the communication device.

5. The communication device according to any one of Claims 1 to 4, wherein the emergency information delivery means compares a delivery area indicated by the emergency information with a communication area formed by the communication device, and determines whether or not to deliver the emergency information to the communication terminal.

6. A communication terminal that performs communications through a non-3GPP network, comprising:
registration means for making registration to a multicast group managed by a communication device located in the non-3GPP network; and
broadcast communication means for receiving emergency information sent to a multicast address associated with the multicast group from the communication device located in the non-3GPP network and having received the emergency information delivered from a broadcast server located in a 3GPP network.

7. The communication terminal according to Claim 6, wherein the registration means receives the multicast address sent from a node device located in the 3GPP network when an Attach is made to the 3GPP network.

8. The communication terminal according to Claim 7, wherein the registration means receives the multicast address through the communication device located in the non-3GPP network after the communication terminal is authenticated by an authentication server located in the 3GPP network through the communication device located in the non-3GPP network.

9. An information delivery method in a communication device located in a non-3GPP network, comprising:
receiving emergency information delivered from a broadcast server located in a 3GPP network; and
delivering the emergency information to a multicast address as a destination and thereby delivering the emergency information to a communication terminal located in a non-3GPP network, the communication terminal having been registered to a multicast group associated with the multicast address.

10. An information receiving method in a communication terminal that performs communications through a non-3GPP network, comprising:
making registration to a multicast group managed by a communication device located in the non-3GPP network; and
receiving emergency information sent to a multicast address associated with the multicast group from the communication device located in the non-3GPP network and having received the emergency information delivered from a broadcast server located in a 3GPP network.

11. A non-transitory computer readable medium storing a program to be executed by a computer being a communication device located in a non-3GPP network, the program causing the computer to perform:
receiving emergency information delivered from a broadcast server located in a 3GPP network; and
delivering the emergency information to a multicast address as a destination and thereby delivering the emergency information to a communication terminal located in a non-3GPP network, the communication terminal having been registered to a multicast group associated with the multicast address.

12. A non-transitory computer readable medium storing a program to be executed by a computer being a communication terminal that performs communications through a non-3GPP network, the program causing the computer to perform:
making registration to a multicast group managed by a communication device located in the non-3GPP network; and
receiving emergency information sent to a multicast address associated with the multicast group from the communication device located in the non-3GPP network and having received the emergency information delivered from a broadcast server located in a 3GPP network.
